# EUROPEAN PATENT APPLICATION

(11) **EP 4 723 748 A1**
(43) Date of publication of application: **08.04.2026**
(21) Application number: 23938857.2
(22) Date of filing: 31.05.2023
(51) Int. Cl.: H04W 52/02

(54) **LOW-LATENCY TRAFFIC TRANSMISSION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/097488
(87) International publication number: WO 2024/243866

(57) **Abstract**

Embodiments of the present disclosure relate to the technical field of mobile communications, and provides a low-latency traffic transmission method, an electronic device, and a storage medium. The low-latency traffic transmission method is applied to a station device STA. The method comprises: receiving a first radio frame sent by a first AP, wherein a first rTWT SP of the first AP and a second rTWT SP of a second AP are identified in the first radio frame, and the first rTWT SP and the second rTWT SP at least partially overlap in time; and determining, according to whether the STA can receive a message frame of the second AP, whether to join the first rTWT SP. The embodiments of the present disclosure provide a low-latency traffic transmission method, to further perfect the rTWT mechanism, thereby ensuring the transmission of low-latency traffic.

## Description

### TECHNICAL FIELD

Embodiments of the present disclosure relate to the technical field of mobile communication, and in particular, to a low-latency traffic transmission method, an electronic device, and a storage medium.

### BACKGROUND

In the currently researched Wi-Fi technology, a Target Wake Time (TWT) mechanism is proposed to support energy-efficient operation in large-scale Internet of Things (IoT) devices. Simultaneously, to ensure the transmission of the low-latency traffic (latency sensitive traffic), a restricted target wake time (restricted-TWT, rTWT) mechanism is proposed. To further reduce the power consumption of Wi-Fi networks, it is necessary to improve the rTWT mechanism to ensure the transmission of the low-latency traffic.

### SUMMARY

The embodiments of the present disclosure provide a low-latency traffic transmission method, an electronic device, and a storage medium to further improve the rTWT mechanism and ensure the transmission of low-latency traffic.

On one hand, the embodiments of the present disclosure provide a low-latency traffic transmission method, applied to a station (STA), the method including:
receiving a first wireless frame sent by a first AP; where a first rTWT SP of the first AP and a second rTWT SP of a second AP are identified in the first wireless frame, and the first rTWT SP and the second rTWT SP at least partially overlap in time; and
determining whether to join the first rTWT SP according to whether the STA can receive a message frame of the second AP.

On the other hand, the embodiments of the present disclosure further provide a low-latency traffic transmission method, applied to a first access point (AP), the method including:
determining a first wireless frame; where a first rTWT SP of the first AP and a second rTWT SP of a second AP are identified in the first wireless frame; and
sending the first wireless frame, to instruct a station (STA) to determine whether to join the first rTWT SP according to whether the STA can receive a message frame of the second AP; where the first rTWT SP and the second rTWT SP at least partially overlap in time.

On the other hand, the embodiments of the present disclosure further provide an electronic device, which is a station (STA), and the electronic device includes:
a receiving module, configured to receive a first wireless frame sent by a first AP; where a first rTWT SP of the first AP and a second rTWT SP of a second AP are identified in the first wireless frame; and the first rTWT SP and the second rTWT SP at least partially overlap in time; and
a processing module, configured to determine whether to join the first rTWT SP according to whether the STA can receive a message frame of the second AP.

On the other hand, the embodiments of the present disclosure further provide an electronic device, which is a first access point (AP), and the electronic device includes:
a determining module, configured to determine a first wireless frame; where a first rTWT SP of the first AP and a second rTWT SP of a second AP are identified in the first wireless frame; and
a sending module, configured to send the first wireless frame, to instruct a station (STA) to determine whether to join the first rTWT SP according to whether the STA can receive a message frame of the second AP; where the first rTWT SP and the second rTWT SP at least partially overlap in time.

The embodiments of the present disclosure further provide an electronic device, including a memory, a processor, and a computer program stored in the memory and executable on the processor, where the processor, when executing the program, implements the method described in one or more of the embodiments of the present disclosure.

The embodiments of the present disclosure further provide a computer-readable storage medium storing a computer program, and the computer program, when being executed by a processor, implements the method described in one or more of the embodiments of the present disclosure.

In the embodiments of the present disclosure, the STA receives a first wireless frame sent by a first AP. A first rTWT SP of the first AP and a second rTWT SP of a second AP are identified in the first wireless frame. The first rTWT SP and the second rTWT SP at least partially overlap in time. If the STA can receive a message frame of the second AP, it does not join the first rTWT SP to avoid interfering with the transmission of the low-latency traffic between the second AP and its associated STA. If the STA cannot receive the message frame of the second AP, it joins the first rTWT SP to improve frequency utilization. The embodiments of the present disclosure provide a low-latency traffic transmission method to further improve the rTWT mechanism and ensure the transmission of low-latency traffic.

Additional aspects and advantages of the embodiments of the present disclosure will be partially provided in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the accompanying drawings that are to be used in the description of the embodiments of the present disclosure will be briefly introduced below. Obviously, the drawings in the following description are only some embodiments of the present disclosure, and those of ordinary skill in the art may obtain other drawings based on these drawings without paying creative effort.
FIG. 1 is a first scenario schematic diagram according to an embodiment of the present disclosure;
FIG. 2 is a second scenario schematic diagram according to an embodiment of the present disclosure;
FIG. 3 is a first flowchart of a low-latency traffic transmission method provided by an embodiment of the present disclosure;
FIG. 4 is a second flowchart of a low-latency traffic transmission method provided by an embodiment of the present disclosure;
FIG. 5 is a first schematic diagram of a structure of an electronic device provided by an embodiment of the present disclosure;
FIG. 6 is a second schematic diagram of the structure of the electronic device provided by the embodiment of the present disclosure; and
FIG. 7 is a third schematic diagram of the structure of the electronic device provided by the embodiment of the present disclosure.

### DETAILED DESCRIPTION

The exemplary embodiments will be described in detail herein, examples of which are shown in the accompanying drawings. When the drawings are involved in the following description, the same numbers in different drawings represent the same or similar elements, unless otherwise indicated. The embodiments described in the following illustrative embodiments do not represent all embodiments consistent with the present disclosure. Instead, they are merely examples of apparatuses and methods consistent with some of the aspects of the present disclosure as detailed in the appended claims.

The terms used in the embodiments of the present disclosure are for the purpose of describing specific embodiments only and are not intended to restrict the present disclosure. The singular forms of "a", "said", and "the" used in the present disclosure and the appended claims are also intended to include plural forms unless the context clearly indicates otherwise. It should also be understood that the term "and/or" used herein refers to and includes any or all possible combinations of one or more associated items listed. For example, A and/or B may indicate three cases where A exists alone, A and B exist at the same time, and B exists alone. The character "/" generally indicates that the related objects before and after this character are in an "or" relationship. The term "a plurality of" refers to two or more; therefore, in the present disclosure, "a plurality of" may also be understood as "at least two".

It should be understood that although the terms of first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the wording "if used herein may be interpreted as "at the time of ..." or "when ..." or "in response to determining".

A clear and complete description of technical solutions in the embodiments of the present disclosure will be provided below with reference to the drawings in the embodiments of the present disclosure. Obviously, the described embodiments are only a part of the embodiments of the present disclosure, but not all of the embodiments. Based on the embodiments in the present disclosure, all other embodiments obtained by those of ordinary skill in the art without paying creative effort fall within the protection scope of the present disclosure.

The present disclosure provides a low-latency traffic transmission method, an electronic device, and a storage medium to further improve the rTWT mechanism and ensure the transmission of the low-latency traffic.

The method and apparatus are based on the same concept of the application. Since the principles for the method and apparatus to solve the problem are similar, the implementations of the apparatus and the method may refer to each other, and the repeated parts will not be repeated.

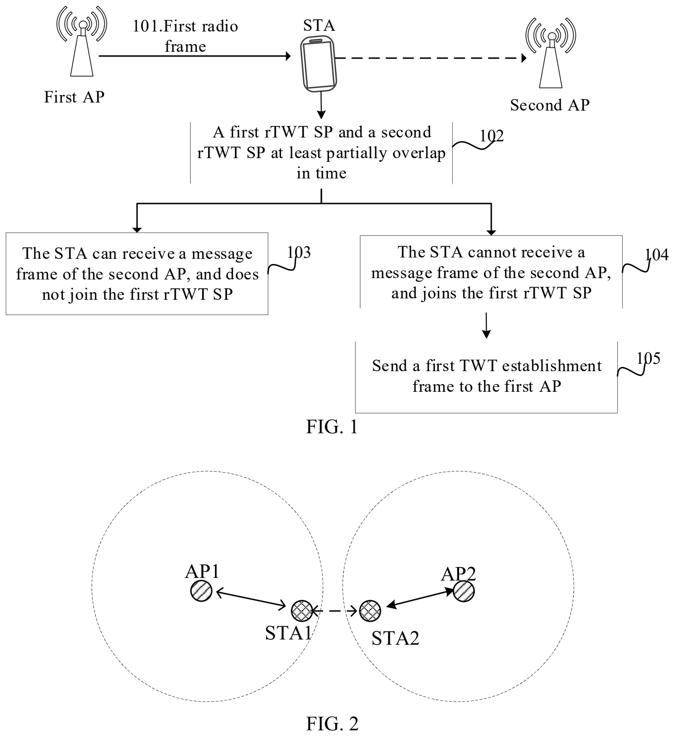

As shown in FIG. 1, FIG. 1 illustrates a schematic diagram of the application scenario of the low-latency traffic transmission method in the embodiment of the present disclosure. The AP is, for example, a device with a wireless-to-wired bridging function, and the AP is responsible for extending the services provided by the wired network to the wireless network. A TDLS device is, for example, a station (STA), and the STA is, for example, an electronic device with a wireless network access function, which provides frame delivery service to enable information transmission.

In step 101, the first AP sends a first wireless frame to the STA, where the first wireless frame is, for example, a Beacon frame or a Probe Response frame.

The first AP is the AP currently associated (Association) with the STA. The first wireless frame identifies the first restricted target wake time (rTWT) service period (SP) of the first AP and the second rTWT SP of the second AP. The second AP is a neighboring AP of the first AP. In the embodiments of the present disclosure, the neighboring AP is, for example, an AP that is relatively close to the first AP in logical topology, such as an AP whose signal strength received by the first AP is relatively high, an AP that is physically close to the first AP, or an AP that is in the same Basic Service Set (BSS) as the first AP. In a WLAN, an AP can discover neighboring APs by obtaining the Basic Service Set identifier (BSSID) sent by other APs through channel probing. The neighboring AP can be recommended as a better roaming target to the STA; furthermore, considering neighboring APs when adjusting radio frequency parameters can make full use of spectrum resources and achieve load balancing among multiple APs.

Optionally, the first wireless frame includes the identification information of the second AP, which is used to identify the neighboring AP corresponding to the second rTWT SP; for example, if the first AP carries the rTWT SPs of multiple neighboring APs in the first wireless frame, then the rTWT SP of the neighboring AP is identified by the identification information of each neighboring AP.

Furthermore, the identification information includes at least one of the following: a Media Access Control (MAC) address, an AP MLD address of the Access Point Multi-Link Device (AP MLD) to which the second AP belongs, and a Basic Service Set (BSS) color.

The MAC address is the MAC address of the neighboring AP under its working link. The BSS color refers to the BSS color value of the BSS formed by the AP affiliated to the AP MLD under a certain link.

Optionally, the first rTWT SP, the second rTWT SP, and the identification information of the second AP may be carried in a TWT element, and the first AP carries the TWT element in the first wireless frame. For example, the identification information of the second AP is carried in the transmission information control (traffic info control) field of the broadcast TWT parameter set field of the TWT element.

As an example, the format of the Broadcast TWT Parameter Set field may be as shown in Table 1 below:

**Table 1:**

| Information Content | Request Type | Target Wake Time | Nominal Minimum TWT Wake Duration | TWT Wake Interval Mantissa | Broadcast TWT Info | Restricted TWT Traffic Info |
|---|---|---|---|---|---|---|
| Number of bytes (Octets) | 2 | 2 | 1 | 2 | 2 | 0 or 3 |

When the Restricted TWT Traffic Info present subfield is set to 1, the Restricted TWT Traffic Info subfield exists in the Restricted TWT Parameter Set field. The format of the Restricted TWT Traffic Info subfield is shown in Table 2 below:

**Table 2:**

| Information Content | Transmission Information Control (Traffic Info Control) | Restricted TWT DL TID Bitmap | Restricted TWT UL TID Bitmap |
|---|---|---|---|
| Number of bytes (Octets) | 1 | 1 | 1 |

The identification information of the second AP may be carried in the Traffic Info Control field. The format of the Traffic Info Control field is, for example, shown in Table 3 below. Specifically, the identification information of the second AP may be carried in a reserved subfield.

**Table 3:**

| Information Content | DL TID Bitmap Valid | UL TID Bitmap Valid | Reserved |
|---|---|---|---|
| Bits | 1 | 1 | 6 |

In step 102, the first rTWT SP and the second rTWT SP at least partially overlap in time.

As shown in the application scenario of FIG. 2, the first AP (AP1) shares the rTWT SP of the second AP (AP2), and the first rTWT SP and the second rTWT SP at least partially overlap in time. It is understood that, in the embodiment of the present disclosure, "at least partially overlap" means, for example, that the first rTWT SP and the second rTWT SP partially or completely overlap in time. If the AP1 and the STA1 perform downlink communication within the first rTWT SP, while the STA2 and the AP2 perform uplink communication within the second rTWT SP, then the transmission of the STA2 will interfere with the data reception of STA1. Thus, the network resource allocation within the second rTWT SP will be wasted, and the transmission requirements of low-latency traffic may not be met.

For ease of explanation, in the embodiment of the present disclosure, the STA1 refers to the STA associated with the first AP, and the STA2 refers to the STA associated with the second AP.

Therefore, the STA determines whether to join the first rTWT SP based on whether it can receive the message frame of the second AP.

In step 103, if the STA can receive the message frame of the second AP, the STA does not join the first rTWT SP.

The message frame of the second AP is used as an inter-PPDU. If the STA can receive the inter-PPDU of the second AP, then STA 2 can also receive the inter-PPDU of the first AP when communicating with the second AP, which indicates that the communication between STA 1 and the first AP will interfere with the communication between the second AP and its associated STA 2. Therefore, if the first rTWT SP and the second rTWT SP overlap at least partially in time, and the STA can receive the message frame of the second AP, the STA does not join the first rTWT SP and does not send a TWT Setup frame to the first AP, thus avoiding interference with the low-latency traffic transmitted between the second AP and its associated STA 2.

When the STA receives a message frame carrying the same identification information, it is determined that the STA can receive the message frame of the second AP. For example, taking the identification information of the second AP including the BSS color as an example, if the BSS color value carried by the inter-PPDU received by the STA is consistent with the BSS color value of the second AP, it is determined that the STA can receive the message frame of the second AP.

Specifically, TWT is an energy-saving technology, aiming to further reduce the power consumption of Wi-Fi networks. Specifically, the TWT technology enables STAs and APs to negotiate a service period (SP) to determine the sleep and wake-up time and frequency of STAs. STAs remain active and communicate during the service period, allowing them to sleep outside of the service period to achieve the goal of energy saving. Furthermore, TWT technology may also enable APs to provide higher-quality services to multiple STAs, minimizing contention or overlap, and improving spectrum efficiency while reducing the power consumption of Wi-Fi networks.

In low-latency transmission scenarios, many applications have strict latency requirements for their real-time data traffic. For example, the average latency or maximum latency is on the order of milliseconds to tens of milliseconds, and applications require real-time data traffic with minimal jitter and high reliability. To further ensure the communication of low-latency (latency sensitive) traffic, a restricted-target wake time (rTWT) is proposed based on TWT technology. The rTWT mechanism allows the AP to use enhanced media access protection mechanisms and resource reservation mechanisms to provide more predictable latency, distinguishing latency-sensitive traffic from other types of traffic. This allows the AP to reduce worst-case latency and/or jitter, providing a more reliable service. Within the second rTWT SP, the second AP reserves transmission resources for low-latency traffic. Therefore, when the first rTWT SP and the second rTWT SP overlap at least partially in time, and the STA can receive the message frame of the second AP, the STA does not join the first rTWT SP and does not send a TWT setup frame to the first AP, thus avoiding interference with the low-latency traffic transmitted between the second AP and its associated STA2.

In step 104, if the STA cannot receive the message frame from the second AP, the STA joins the first rTWT SP.

Conversely, if the STA cannot receive the message frame of the second AP, the STA joins the first rTWT SP, performs step 105, and sends a TWT Setup frame to the first AP to transmit low-latency traffic and improve spectrum utilization.

In the embodiments of the present disclosure, the STA receives a first wireless frame sent by a first AP. A first rTWT SP of the first AP and a second rTWT SP of a second AP are identified in the first wireless frame. The first rTWT SP and the second rTWT SP at least partially overlap in time. If the STA can receive a message frame of the second AP, it does not join the first rTWT SP to avoid interfering with the transmission of the low-latency traffic between the second AP and its associated STA. If the STA cannot receive the message frame of the second AP, it joins the first rTWT SP to improve frequency utilization. The embodiments of the present disclosure provide a low-latency traffic transmission method to further improve the rTWT mechanism and ensure the transmission of low-latency traffic.

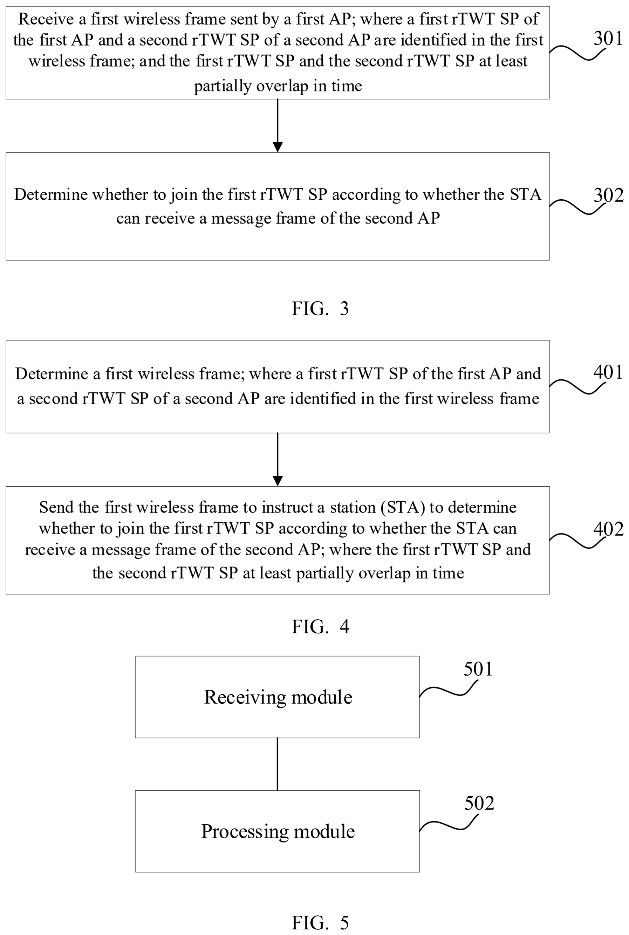

Referring to FIG. 3, the embodiment of the present disclosure provides a low-latency traffic transmission method applied to a station (STA). The method includes the following steps.

In step 301, a first wireless frame sent by a first AP is received; where a first rTWT SP of the first AP and a second rTWT SP of a second AP are identified in the first wireless frame.

The first AP is the AP currently associated (Association) with the STA. The STA receives a first wireless frame sent by the first AP, and the rTWT SP of the first AP and the second rTWT SP of the second AP are identified in the first wireless frame. The second AP is a neighboring AP of the first AP. In the embodiments of the present disclosure, the neighboring AP is, for example, an AP that is relatively close to the first AP in logical topology, such as an AP whose signal strength received by the first AP is relatively high, an AP that is physically close to the first AP, or an AP that is in the same Basic Service Set (BSS) as the first AP. In a WLAN, an AP can discover neighboring APs by obtaining the Basic Service Set identifier (BSSID) sent by other APs through channel probing. The neighboring AP can be recommended as a better roaming target to the STA; furthermore, considering neighboring APs when adjusting radio frequency parameters can make full use of spectrum resources and achieve load balancing among multiple APs.

In step 302, the first rTWT SP and the second rTWT SP at least partially overlap in time, and it is determined whether to join the first rTWT SP according to whether the STA can receive a message frame of the second AP.

As shown in the application scenario in FIG. 2, if the first AP shares the rTWT SP of the second AP, and the first rTWT SP and the second rTWT SP overlap at least partially in time, then the STA determines whether to join the first rTWT SP based on whether it can receive the message frame of the second AP.

For example, if the AP1 and the STA1 perform downlink communication within the first rTWT SP, while the STA2 and the AP2 perform uplink communication within the second rTWT SP, the transmission of STA2 will interfere with the data reception of STA1. In this case, the network resource allocation within the second rTWT SP will be wasted, and the transmission requirements of low-latency traffic may not be met. Conversely, if the STA cannot receive the message frame of the second AP, the STA joins the first rTWT SP to improve frequency utilization.

Optionally, in the embodiment of the present disclosure, determining whether to join the first rTWT SP based on whether the STA can receive the message frame of the second AP includes:
if the STA can receive the message frame of the second AP, not joining the first rTWT SP;
   or
if the STA cannot receive the message frame of the second AP, joining the first rTWT SP.

If the STA can receive a message frame of the second AP, it does not join the first rTWT SP to avoid interfering with the transmission of the low-latency traffic between the second AP and its associated STA. If the STA cannot receive the message frame of the second AP, it joins the first rTWT SP to improve frequency utilization.

Optionally, in this embodiment of the present disclosure, the first wireless frame includes the identification information of the second AP, which is used to identify the neighboring AP corresponding to the second rTWT SP. For example, if the first AP carries the rTWT SPs of multiple neighboring APs in the first wireless frame, then the rTWT SP of the neighboring AP is identified by the identification information of each neighboring AP.

The identification information includes at least one of the following: a MAC address, an AP MLD address of the AP MLD to which the second AP belongs, and a BSS color.

Optionally, in the embodiments of the present disclosure, the method further includes the following step.

The STA receives a message frame carrying the same identification information and determines that the STA can receive the message frame of the second AP. For example, taking the identification information of the second AP including the BSS color as an example, if the BSS color value carried by the inter-PPDU received by the STA is consistent with the BSS color value of the second AP, it is determined that the STA can receive the message frame of the second AP.

Optionally, in the embodiment of the present disclosure, the identification information of the second AP is carried in the transmission information control field of the broadcast TWT parameter set field of the TWT element of the first wireless frame. Referring to Tables 1 to 3 above, the identification information of the second AP may be carried in the TWT element, and the first AP carries the TWT element in the first wireless frame. The identification information of the second AP is carried in the transmission information control (traffic info control) field of the broadcast TWT parameter set field of the TWT element.

Optionally, in the embodiment of the present disclosure, joining the first rTWT SP includes:
sending the first TWT setup frame to the first AP;
where the first TWT setup frame requests to become a member of the rWT schedule corresponding to the first rTWT SP, so as to transmit low-latency traffic and improve spectrum utilization.

In the embodiment of the present disclosure, the STA receives a first wireless frame sent by a first AP. The first wireless frame identifies a first rTWT SP of the first AP and a second rTWT SP of a second AP. The first rTWT SP and the second rTWT SP overlap at least partially in time. If the STA can receive a message frame of the second AP, it does not join the first rTWT SP to avoid interfering with the transmission of the low-latency traffic between the second AP and its associated STA. If the STA cannot receive the message frame of the second AP, it joins the first rTWT SP to improve frequency utilization.

Referring to FIG. 4, the present disclosure provides a low-latency traffic transmission method applied to a first access point (AP), and the method includes the following steps.

In step 401, a first wireless frame is determined; where a first rTWT SP of the first AP and a second rTWT SP of a second AP are identified in the first wireless frame.

The first AP is the AP currently associated (Association) with the STA. The first AP determines a first wireless frame, which identifies the rTWT SP of the first AP and the second rTWT SP of the second AP. The second AP is a neighboring AP of the first AP. In the embodiments of the present disclosure, the neighboring AP is, for example, an AP that is relatively close to the first AP in logical topology, such as an AP whose signal strength received by the first AP is relatively high, an AP that is physically close to the first AP, or an AP that is in the same Basic Service Set (BSS) as the first AP. In a WLAN, an AP can discover neighboring APs by obtaining the Basic Service Set identifier (BSSID) sent by other APs through channel probing. The neighboring AP can be recommended as a better roaming target to the STA; furthermore, considering neighboring APs when adjusting radio frequency parameters can make full use of spectrum resources and achieve load balancing among multiple APs.

In step 402, the first wireless frame is sent to instruct a station (STA) to determine whether to join the first rTWT SP according to whether the STA can receive a message frame of the second AP; where the first rTWT SP and the second rTWT SP at least partially overlap in time.

The first AP shares the rTWT SP of the second AP, and the first rTWT SP and the second rTWT SP at least partially overlap in time. The first AP instructs the STA to determine whether to join the first rTWT SP based on whether it can receive the message frame of the second AP.

For example, if the AP1 and the STA1 perform downlink communication within the first rTWT SP, while the STA2 and the AP2 perform uplink communication within the second rTWT SP, the transmission of STA2 will interfere with the data reception of STA1. In this case, the network resource allocation within the second rTWT SP will be wasted, and the transmission requirements of low-latency traffic may not be met. Conversely, if the STA cannot receive the message frame of the second AP, the STA joins the first rTWT SP to improve frequency utilization.

Optionally, in the embodiment of the present disclosure, instructing the station (STA) to determine whether to join the first rTWT SP according to whether the STA can receive the message frame of the second AP includes:
instructing the STA, if the STA can receive the message frame of the second AP, to join the first rTWT SP;
   or
instructing the STA, if the STA cannot receive the message frame of the second AP, to join the first rTWT SP.

If the STA can receive the message frame from the second AP, the first AP instructs the STA not to join the first rTWT SP to avoid interfering with the low-latency traffic transmitted between the second AP and its associated STA. If the STA cannot receive the message frame from the second AP, the first AP instructs the STA to join the first rTWT SP to improve frequency utilization.

Optionally, in the embodiment of the present disclosure, the first wireless frame includes the identification information of the second AP;
The identification information includes at least one of the following: a MAC address, an AP MLD address of the AP MLD to which the second AP belongs, and a BSS color.

The identification information is used to identify the neighboring AP corresponding to the second rTWT SP. For example, if the first AP carries the rTWT SPs of multiple neighboring APs in the first wireless frame, then the rTWT SP of each neighboring AP is identified by the identification information of that neighboring AP.

Optionally, in the embodiment of the present disclosure, the identification information of the second AP is carried in the transmission information control (traffic info control) field of the broadcast TWT parameter set field of the TWT element of the first wireless frame. Referring to Tables 1 to 3 above, the identification information of the second AP may be carried in the TWT element, and the first AP carries the TWT element in the first wireless frame. The identification information of the second AP is carried in the transmission information control (traffic info control) field of the broadcast TWT parameter set field of the TWT element.

Optionally, in the embodiment of the present disclosure, after sending the first wireless frame, the method includes:
receiving a first TWT Setup frame sent by the STA;
where the first TWT setup frame requests to become a member of the rTWT schedule corresponding to the first rTWT SP, so as to transmit low-latency traffic and improve spectrum utilization.

In the embodiment of the disclosure, the first AP determines and sends the first wireless frame, in which the first wireless frame identifies the first rTWT SP of the first AP and the second rTWT SP of the second AP. The first rTWT SP and the second rTWT SP at least partially overlap in time. If the STA can receive a message frame of the second AP, it does not join the first rTWT SP to avoid interfering with the transmission of the low-latency traffic between the second AP and its associated STA. If the STA cannot receive the message frame of the second AP, it joins the first rTWT SP to improve frequency utilization.

Referring to FIG. 5, based on the same principle as the method provided in the embodiments of the present disclosure, the embodiments of the present disclosure also provide an electronic device, which is a station (STA), and the electronic device includes:
a receiving module 501, configured to receive a first wireless frame sent by a first AP; where a first rTWT SP of the first AP and a second rTWT SP of a second AP are identified in the first wireless frame; and the first rTWT SP and the second rTWT SP at least partially overlap in time; and
a processing module 502, configured to determine whether to join the first rTWT SP according to whether the STA can receive a message frame of the second AP.

In an optional embodiment, the processing module 502 includes:
a first processing submodule, configured to join the first rTWT SP if the STA can receive the message frame of the second AP;
   or
a second processing submodule, configured to join the first rTWT SP if the STA cannot receive the message frame of the second AP.

In an optional embodiment, the first wireless frame includes the identification information of the second AP.

The identification information includes at least one of the following: a MAC address, an AP MLD address of the AP MLD to which the second AP belongs, and a BSS color.

The method further includes:
when the STA receives a message frame carrying the same identification information, determining that the STA can receive the message frame of the second AP.

In an optional embodiment, the identification information of the second AP is carried in the traffic info control field of the broadcast TWT parameter set field of the TWT element of the first wireless frame.

In an optional embodiment, the processing module 502 includes:
a sending submodule, configured to send the first TWT setup frame to the first AP;
where the first TWT setup frame requests to become a member of the rTWT schedule corresponding to the first rTWT SP.

The present disclosure further provides a low-latency traffic transmission apparatus applied to a station (STA), the apparatus including:
a wireless frame receiving module, configured to receive a first wireless frame sent by a first AP; where a first rTWT SP of the first AP and a second rTWT SP of a second AP are identified in the first wireless frame; and the first rTWT SP and the second rTWT SP at least partially overlap in time; and
an rTWT processing module, configured to determine whether to join the first rTWT SP according to whether the STA can receive a message frame of the second AP.

The apparatus also includes other modules of the electronic device described in the foregoing embodiments, which will not be described in detail here.

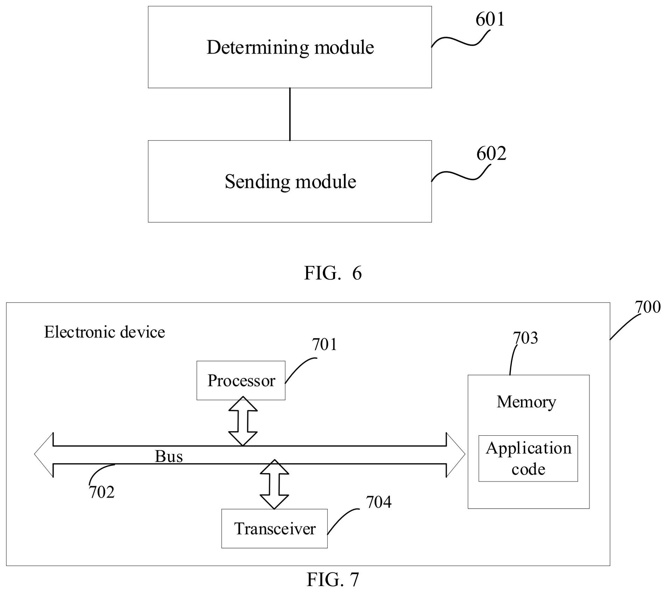

Referring to FIG. 6, based on the same principle as the method provided in the embodiments of the present disclosure, the embodiments of the present disclosure further provide an electronic device, which is a first access point (AP), and the electronic device includes:
a determining module 601, configured to determine a first wireless frame; where a first rTWT SP of the first AP and a second rTWT SP of a second AP are identified in the first wireless frame; and
a sending module 602, configured to send the first wireless frame, to instruct a station (STA) to determine whether to join the first rTWT SP according to whether the STA can receive a message frame of the second AP; where the first rTWT SP and the second rTWT SP at least partially overlap in time.

In an optional embodiment, the sending module 602 includes:
a first indication submodule, configured to instruct, in response to that the STA can receive the message frame of the second AP, the STA to join the first rTWT SP;
   or
a second indication submodule, configured to instruct, in response to the STA not being able to receive the message frame of the second AP, the STA to join the first rTWT SP.

In an optional embodiment, the first wireless frame includes the identification information of the second AP;
The identification information includes at least one of the following: a MAC address, an AP MLD address of the AP MLD to which the second AP belongs, and a BSS color.

In an optional embodiment, the identification information of the second AP is carried in the traffic info control field of the broadcast TWT parameter set field of the TWT element of the first wireless frame.

In an optional embodiment, the electronic device includes:
a TWT receiving module, configured to receive a first TWT setup frame sent by the STA;
where the first TWT setup frame requests to become a member of the rTWT schedule corresponding to the first rTWT SP.

The present disclosure also provides a low-latency traffic transmission apparatus applied to a station (STA), the apparatus including:
a wireless frame determining module, configured to determine a first wireless frame; where a first rTWT SP of the first AP and a second rTWT SP of a second AP are identified in the first wireless frame;
a wireless frame sending module, configured to send the first wireless frame, to instruct a station (STA) to determine whether to join the first rTWT SP according to whether the STA can receive a message frame of the second AP; where the first rTWT SP and the second rTWT SP at least partially overlap in time.

The apparatus also includes other modules of the electronic device described in the foregoing embodiments, which will not be described in detail here.

In an optional embodiment, the embodiments of the present disclosure further provide an electronic device, as shown in FIG. 7. The electronic device 700 shown in FIG. 7 may be a server, including a processor 701 and a memory 703. The processor 701 and the memory 703 are connected, for example, via a bus 702. Optionally, the electronic device 700 may further include a transceiver 704. It should be noted that in practical applications, the number of transceivers 704 is not limited to one, and the structure of the electronic device 700 does not constitute a limitation on the embodiments of the present disclosure.

The processor 701 may be a Central Processing Unit (CPU), a general-purpose processor, a Digital Signal Processor (DSP), an Application Specific Integrated Circuit (ASIC), a Field Programmable Gate Array (FPGA), or other programmable logic devices, transistor logic devices, hardware components, or any combination thereof. It may implement or execute the various exemplary logic blocks, modules, and circuits described in conjunction with the present disclosure. The processor 701 may also be a combination that implements computing functions, for example, including a combination of one or more microprocessors, a combination of a DSP and a microprocessor, and the like.

The bus 702 may include a path for transmitting information between the above components. The bus 702 may be a Peripheral Component Interconnect (PCI) bus or an Extended Industry Standard Architecture (EISA) bus, or the like. The bus 702 may be divided into an address bus, a data bus, a control bus, etc. For ease of representation, only one thick line is used in FIG. 7 for indicating the bus, but it does not indicate that there is only one bus or only one type of bus.

The memory 703 may be a Read Only Memory (ROM) or other types of static storage devices that may store static information and instructions, a Random Access Memory (RAM) or other types of dynamic storage devices that may store information and instructions, or an Electrically Erasable Programmable Read Only Memory (EEPROM), a Compact Disc Read Only Memory (CD-ROM) or other optical disk storage, optical disc storage (including compact optical disc, laser disc, optical disc, digital versatile optical disc, Blu-ray disc, etc.), a magnetic disk storage medium or other magnetic storage device, or any other medium that may be used to carry or store desired program code in the form of instructions or data structures and may be accessed by a computer, but is not limited thereto.

The memory 703 is used to store the application code for executing the solutions of the present disclosure, and is controlled and executed by the processor 701. The processor 701 is used to execute the application code stored in the memory 703 to implement the content shown in the foregoing method embodiments.

The electronic devices include but are not limited to: mobile terminals such as mobile phones, laptops, digital broadcast receivers, personal digital assistants (PDAs), tablet computers (PADs), portable multimedia players (PMPs), and in-vehicle terminals (e.g., in-vehicle navigation terminals), etc., as well as fixed terminals such as digital TVs and desktop computers, etc. The electronic device shown in FIG. 7 is merely an example and should not be construed as limiting the functionality and scope of use of the embodiments of the present disclosure.

The server provided by the present disclosure may be an independent physical server, a server cluster or a distributed system composed of multiple physical servers, or a cloud server providing basic cloud computing services such as cloud services, cloud databases, cloud computing, cloud functions, cloud storage, network services, cloud communication, middleware services, domain name services, security services, CDN, and big data and artificial intelligence platforms. The terminal may be a smartphone, tablet, laptop, desktop computer, smart speaker, smartwatch, etc., but is not limited to these. The terminal and server can be directly or indirectly connected via wired or wireless communication modes, and the present disclosure does not limit this herein.

An embodiment of the present disclosure provides a computer-readable storage medium on which a computer program is stored, when being run on a computer, causes the computer to execute the corresponding contents in the above method embodiments.

It should be understood that, although the steps in the flowcharts of the accompanying drawings are shown in sequence as indicated by the arrows, these steps are not necessarily performed sequentially in the order as indicated by the arrows. There is no strict restriction on the performing order of these steps, and they may be performed in other orders, unless otherwise stated herein. Moreover, at least a part of the steps in the flowcharts of the accompanying drawings may include multiple sub-steps or multiple stages, and these sub-steps or stages are not necessarily completed at the same time, but may be performed at different times, and the performing order thereof is not necessarily sequential, but may be performed in turn or alternately with other steps or at least a part of the sub-steps or stages of other steps.

It should be noted that the computer-readable medium mentioned above in the present disclosure may be a computer-readable signal medium or a computer-readable storage medium or any combination of the two. The computer-readable storage medium may be, for example, but are not limited to, an electrical, magnetic, optical, electromagnetic, infrared, or semiconductor system, apparatus or device, or any combination of the above. More specific examples of the computer-readable storage medium may include, but is not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as part of a carrier wave, which carries computer-readable program code. The propagated data signal may take a variety of forms, including but not limited to electromagnetic signals, optical signals, or any suitable combination of the above. The computer readable signal medium may also be any computer readable medium other than the computer readable storage medium, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The above computer-readable medium may be included in the above electronic device; or it may exist independently and not be assembled into the electronic device.

The above computer-readable medium carries one or more programs, which, when executed by the electronic device, cause the electronic device to perform the methods shown in the above embodiments.

According to an aspect of the present disclosure, a computer program product or a computer program is provided, the computer program product or the computer program includes computer instructions, and the computer instructions are stored in a computer-readable storage medium. A processor of a computer device reads the computer instructions from the computer-readable storage medium, and the processor executes the computer instructions, to cause the computer device to perform the methods provided in the above various optional implementations.

The computer program code for performing the operations of the present disclosure may be written in one or more programming languages, or a combination thereof, including object-oriented programming languages, such as Java, Smalltalk, C++, and conventional procedural programming languages, such as "C" language or similar programming languages. The program code may be executed entirely on the user's computer, partially executed on the user's computer, executed as a separate software package, executed partially on the user's computer and partially on a remote computer, or executed entirely on a remote computer or server. In the cases involving a remote computer, the remote computer may be connected to the user's computer through any type of network, including a local area network (LAN) or a wide area network (WAN), or may be connected to an external computer (e.g., via the Internet using an Internet service provider).

The flow charts and block diagrams in the accompanying drawings illustrate the possible architectures, functions and operations of the system, method and computer program product according to various embodiments of the present disclosure. In this regard, each of the blocks in the flow charts or block diagrams may represent a module, a program segment or part of code, and the module, the program segment or the part of code contains one or more executable instructions for realizing the specified logical functions. It should also be noted that in some alternative implementations, the functions marked in the blocks may also occur in a sequence different from that marked in the accompanying drawings. For example, two blocks shown in succession may actually be executed substantially in parallel, or they may sometimes be executed in the opposite order, depending on the functions involved. It should also be noted that each block in the block diagrams and/or flow charts, and the combination of the blocks in the block diagrams and/or flow charts may be implemented with a dedicated hardware-based system that performs a specified function or operation, or may be implemented with a combination of dedicated hardware and computer instructions.

The modules involved in the embodiments described in the present disclosure may be implemented in software or in hardware. The names of the modules do not make limitations on the modules themselves in some cases. For example, a module A may also be described as "a module A for performing operation B".

Those described above are only explanations of preferred embodiments of the present disclosure and the technical principles employed. Those skilled in the art should understand that the scope of disclosure involved in the present disclosure is not limited to the technical solutions formed by the above specific combination of the technical features, but should also cover other technical solutions formed by any combination of the above technical features or their equivalent features without departing from the above disclosed concept, for example, a technical solution formed by replacing the above features with the technical features with similar functions disclosed in the present disclosure (but not limited to).

## Claims

1. A low-latency traffic transmission method, applied to a station (STA), comprising:
receiving a first wireless frame sent by a first access point (AP); wherein a first restricted target wake time service period (rTWT SP) of the first AP and a second rTWT SP of a second AP are identified in the first wireless frame; and the first rTWT SP and the second rTWT SP at least partially overlap in time; and
determining whether to join the first rTWT SP according to whether the STA is able to receive a message frame of the second AP.

2. The low-latency traffic transmission method according to claim 1, wherein determining whether to join the first rTWT SP according to whether the STA is able to receive the message frame of the second AP comprises:
in response to that the STA is able to receive the message frame of the second AP, not joining the first rTWT SP;
or
in response to that the STA is not able to receive the message frame of the second AP, joining the first rTWT SP.

3. The low-latency traffic transmission method according to claim 1 or 2, wherein the first wireless frame comprises identification information of the second AP;
wherein the identification information comprises at least one of: a Media Access Control (MAC) address, a multi-link access point device (AP MLD) address of the AP MLD to which the second AP belongs, and a Basic Service Set (BSS) color.

4. The low-latency traffic transmission method according to claim 3, wherein,
the STA receives a message frame carrying the same identification information, and determines that the STA is able to receive the message frame of the second AP.

5. The low-latency traffic transmission method according to claim 3, wherein the identification information of the second AP is carried in a transmission information control (traffic info control) field of a broadcast TWT parameter set field of a TWT element of the first wireless frame.

6. The low-latency traffic transmission method according to claim 1 or 2, wherein, joining the first rTWT SP comprises:
sending a first TWT setup frame to the first AP;
wherein the first TWT setup frame requests to become a member of an rTWT schedule corresponding to the first rTWT SP.

7. A low-latency traffic transmission method, applied to a first access point (AP), comprising:
determining a first wireless frame; wherein a first rTWT SP of the first AP and a second rTWT SP of a second AP are identified in the first wireless frame; and
sending the first wireless frame, to instruct a station (STA) to determine whether to join the first rTWT SP according to whether the STA is able to receive a message frame of the second AP; wherein the first rTWT SP and the second rTWT SP at least partially overlap in time.

8. The low-latency traffic transmission method according to claim 7, wherein instructing the STA to determine whether to join the first rTWT SP according to whether the STA is able to receive the message frame of the second AP comprises:
instructing the STA, in response to that the STA is able to receive the message frame of the second AP, to join the first rTWT SP;
or
instructing the STA, in response to that the STA is not able to receive the message frame of the second AP, to join the first rTWT SP.

9. The low-latency traffic transmission method according to claim 7 or 8, wherein the first wireless frame comprises identification information of the second AP;
wherein the identification information comprises at least one of: a MAC address, an AP MLD address of the AP MLD to which the second AP belongs, and a BSS color.

10. The low-latency traffic transmission method according to claim 9, wherein the identification information of the second AP is carried in a transmission information control (traffic info control) field of a broadcast TWT parameter set field of a TWT element of the first wireless frame.

11. The low-latency traffic transmission method according to claim 7 or 8, wherein, after sending the first wireless frame, the method includes:
receiving a first TWT setup frame sent by the STA;
wherein the first TWT setup frame requests to become a member of an rTWT schedule corresponding to the first rTWT SP.

12. An electronic device, wherein the electronic device is a station (STA), and comprises:
a receiving module, configured to receive a first wireless frame sent by a first AP; wherein a first restricted target wake time service period (rTWT SP) of the first AP and a second rTWT SP of a second AP are identified in the first wireless frame; and the first rTWT SP and the second rTWT SP at least partially overlap in time; and
a processing module, configured to determine whether to join the first rTWT SP according to whether the STA is able to receive a message frame of the second AP.

13. An electronic device, wherein the electronic device is a first access point (AP), and comprises:
a determining module, configured to determine a first wireless frame; wherein a first rTWT SP of the first AP and a second rTWT SP of a second AP are identified in the first wireless frame; and
a sending module, configured to send the first wireless frame, to instruct a station (STA) to determine whether to join the first rTWT SP according to whether the STA is able to receive a message frame of the second AP; wherein the first rTWT SP and the second rTWT SP at least partially overlap in time.

14. An electronic device, comprising a memory, a processor and a computer program stored in the memory and executable on the processor, wherein the processor, when executing the program, implements the method according to any one of claims 1 to 6 or the method according to any one of claims 7 to 11.

15. A computer-readable storage medium, wherein the computer-readable storage medium stores a computer program, and the computer program, when being executed by a processor, implements the method according to any one of claims 1 to 6 or the method according to any one of claims 7 to 11.
